# EUROPEAN PATENT APPLICATION

(11) **EP 4 318 221 A1**
(43) Date of publication of application: **07.02.2024**
(21) Application number: 21936805.7
(22) Date of filing: 29.11.2021
(51) Int. Cl.: G06F 9/30

(54) **DRIVING CONTROL INSTRUCTION GENERATION METHOD, HETEROGENEOUS COMPUTING METHOD, RELATED APPARATUSES AND SYSTEM**

(30) Priority: 17.04.2021 CN 202110417257
(71) Applicant: Huawei Technologies Co., Ltd., Shenzhen, Guangdong 518129 (CN)
(72) Inventor: MA, Jibin, Shenzhen, Guangdong 518129 (CN); YU, Xiaoan, Shenzhen, Guangdong 518129 (CN); LIANG, Qi, Shenzhen, Guangdong 518129 (CN); XU, Qichao, Shenzhen, Guangdong 518129 (CN); WANG, Yongjian, Shenzhen, Guangdong 518129 (CN); DUAN, Xiaoxiang, Shenzhen, Guangdong 518129 (CN)
(74) Representative: Isarpatent
(86) International application number: PCT/CN2021/134153
(87) International publication number: WO 2022/217939

(57) **Abstract**

This application relates to the vehicle field, and in particular, to the autonomous driving field, and specifically discloses a driving control instruction generation method, which is applied to an automated driving system. The automated driving system includes one or more service node sets, each service node set includes one or more service function sets, each service function set includes one or more basic algorithm sets, and the method includes: determining a target service node; invoking, from the one or more service function sets based on a current driving scenario, a target service function corresponding to the target service node; and invoking basic algorithms corresponding to the target service function. Based on a software framework of a hierarchical model of a service node, a service function, and a basic algorithm unit provided in this application, in an entire process of constructing the software framework, main work of a service developer is enabled to focus on thinking logic of a service, and development workload and development complexity are reduced.

## Description

This application claims priority to Chinese Patent Application No. 202110417257.7, filed with the China National Intellectual Property Administration on April 17, 2021 and entitled "DRIVING CONTROL INSTRUCTION GENERATION METHOD, HETEROGENEOUS COMPUTING METHOD, RELATED APPARATUS, AND SYSTEM", which is incorporated herein by reference in its entirety.

### TECHNICAL FIELD

This application relates to the autonomous driving field, and in particular, to an autonomous driving control instruction generation method, a heterogeneous computing method, a related apparatus, a vehicle, and a program development system.

### BACKGROUND

During development of an autonomous driving algorithm, the algorithm is divided into a plurality of different service nodes, for example, a sensing node, a positioning node, a decision-making node, and a planning and control node, to process different service functions. Each node is usually independently deployed in a process. To develop a service node for algorithm processing, a developer needs to complete the following tasks from a main function of a process to algorithm completion: planning of multithreading, planning of external communication, planning of mechanisms of synchronization and communication between threads, planning of time sequences of different units and processing steps, and planning of algorithm submodule division. Workload of these processes is heavy, and only a developer with rich programming experience is qualified. In addition, the development process is difficult, time-consuming, and problematic. An algorithm developer often spends a lot of time on this and cannot really focus on algorithm development.

### SUMMARY

This application provides an autonomous driving control instruction generation method, a heterogeneous computing method, a related apparatus, a vehicle, and a program development system. Based on a hierarchical model provided in this application, a service developer does not need to start from a main function of a process to algorithm completion, but only needs to construct a software framework based on the hierarchical model, and then write program code in a basic algorithm unit in the framework, which helps reduce development workload and development complexity of the service developer during program development; and constructs an executable entity based on a basic algorithm of a program, and executes the executable entity based on a type of the executable entity by using an executor of a corresponding type, so that computing capabilities of a plurality of heterogeneous computing units are fully utilized, and load of the heterogeneous computing units is more balanced.

According to a first aspect, this application provides an autonomous driving control instruction generation method, applied to an automated driving system. The automated driving system includes one or more service node sets, each service node set includes one or more service function sets, each service function set includes one or more basic algorithm sets, and the method includes: determining a target service node; invoking, from the one or more service function sets based on a current driving scenario, a target service function corresponding to the target service node; and invoking basic algorithms corresponding to the target service function.

The service node set includes one or more service nodes, each service node set includes one or more service functions, each basic algorithm set includes one or more basic algorithms, each service node includes one or more service functions, and each service function includes one or more basic algorithms. Therefore, it may be considered that the service node set includes one or more service function sets, and each service function set includes one or more basic algorithm sets. The target service node is a service node in the service node set.

The target service function may include one or more service functions in a same service node, or may include one or more service functions in different service nodes. Optionally, different service nodes or service functions may include a same basic algorithm. For example, a same algorithm in different service nodes or service functions may be processed by using a same basic algorithm, to implement reuse of the basic algorithm.

In a possible implementation, the basic algorithm may be customized by a user, and a granularity of dividing the basic algorithm may be controlled by the user based on a service requirement. In a possible implementation, division of the basic algorithm may be provided by a computing framework.

It should be noted that proper division of the basic algorithm helps improve a reuse opportunity of the basic algorithm; flexibility of basic algorithm combination may be improved by using a service function layer; and an effect of packaging a plurality of service functions into a process for calculation may be implemented through division of the service node.

A software framework based on a hierarchical model that is of the service node set, the service function set, and the basic algorithm and that is provided in this application has clear logic and low complexity, so that a service developer can first design some basic algorithms, and then combine these basic units in a tool dragging manner, to complete service logic modeling. During an entire process of constructing the software framework, the service developer mainly focuses on thinking logic of a service and does not need to consider details of implementing a specific software function. This reduces development workload and improves development usability. After the software framework is constructed, the service developer only needs to write logic code of a core algorithm in the basic algorithm, so that burden of constructing a basic code framework by the service developer is reduced.

In a possible implementation, before the invoking, from the one or more service function sets based on a current driving scenario, a target service function corresponding to the target service node, the method further includes:
obtaining the current driving scenario based on sensory data.

In a possible implementation, before the invoking, from the one or more service function sets based on a current driving scenario, a target service function corresponding to the target service node, the method further includes:
obtaining a first driving scenario selected by a user; obtaining a second driving scenario based on the sensory data; determining whether the first driving scenario is consistent with the second driving scenario; and if the first driving scenario is inconsistent with the second driving scenario, obtaining the first driving scenario and using the first driving scenario as the current driving scenario.

In a possible implementation, the obtaining the current driving scenario based on sensory data includes:
obtaining a first driving scenario selected by a user; obtaining a second driving scenario based on the sensory data; determining whether the first driving scenario is consistent with the second driving scenario; and if the first driving scenario is inconsistent with the second driving scenario, obtaining the first driving scenario and using the first driving scenario as the current driving scenario.

Identification of the driving scenario may be implemented by analyzing the sensory data, that is, a driving scenario in which a vehicle is currently located is determined by using the sensory data. In a possible implementation, identification of a scenario may be determined by a selection of a driver or a passenger. In a possible implementation, when a driving scenario selected by a user (for example, a driver or a passenger) is inconsistent with a driving scenario identified by using sensory data, the driving scenario selected by the driver or the passenger is used as the current driving scenario. In a possible implementation, when a driving scenario selected by the driver or the passenger is inconsistent with a driving scenario identified by using sensory data, the driving scenario identified by using the sensory data is used as the current driving scenario.

For service function switching scenarios, for example, a side parking function of a highway driving scenario and a roadside parking function of an urban road driving scenario, algorithm implementation is different due to different functions of the two scenarios. A service algorithm developer can define the functions of the two scenarios as two different service functions when constructing the software framework. During execution of an autonomous driving program, a scenario is identified based on the sensory data, and different service functions are run. An entire process is simple and fast, and problems such as thread setting, condition branch processing, mutual exclusion, and synchronization in logic implementation of the autonomous driving program do not need to be considered.

In a possible implementation, the invoking basic algorithms corresponding to the target service function includes:
obtaining a first executable entity based on to-be-processed data and a first basic algorithm, where the first executable entity is sent to a wait queue, and the first basic algorithm is one of the basic algorithms corresponding to the target service function.

The executable entity includes executable algorithm code (that is, the basic algorithm) and the to-be-processed data.

In a possible implementation, the automated driving system further includes at least one sensor, and before the obtaining a first executable entity based on to-be-processed data and a first basic algorithm, the method further includes:
obtaining the to-be-processed data from an upper-level message queue, where the to-be-processed data is collected by the at least one sensor, or the to-be-processed data is a scheduling message obtained after a second executable entity is executed, and the second executable entity is executed before the first executable entity.

In a possible implementation, after the first executable entity is sent to the wait queue, the method further includes:
sending the first executable entity from the wait queue to a ready queue according to a preset scheduling policy.

It should be noted that the preset scheduling policy may be adjusted based on an actual service requirement, to make full use of heterogeneous computing resources. In a possible implementation, when executable entities sequentially generated by sensory data that is input at consecutive moments are all in the wait queue, concurrent computing may be implemented through scheduling. For example, when executable entities R1', R1", and R1‴ of a same type corresponding to sensory data at consecutive moments t1, t2, and t3 are all in the wait queue, the three executable entities may be scheduled to enter a ready queue corresponding to an executor of the type, and are further concurrently executed by the executor. After R1', R1", and R1‴ are executed, based on a preset sequence of a directed acyclic graph, executable entities R2', R2", and R2‴ respectively corresponding to three consecutive moments are generated, and enter the wait queue.

In a possible implementation, the method further includes: executing the first executable entity in the ready queue.

In a possible implementation, the automated driving system further includes at least one executor, and the sending the first executable entity from the wait queue to a ready queue according to a preset scheduling policy further includes:
sending, based on a type of the first executable entity, the first executable entity to a ready subqueue corresponding to the type of the first executable entity, where the ready queue includes at least one ready subqueue, and the at least one ready subqueue is in a one-to-one correspondence with the at least one executor.

The at least one executor is obtained based on at least one heterogeneous computing unit, executors obtained based on a same heterogeneous computing unit have a same type, and a type of an executor matches a type of an executable entity executed by the executor.

The heterogeneous computing unit includes one or more of a central processing unit (central processing unit, CPU), a graphics processing unit (graphics processing unit, GPU), a neural-network processing unit (neural-network processing unit, NPU), a digital signal processor (digital signal processor, DSP), and a hardware acceleration unit. Types of executors obtained through abstraction by the CPU are all CPU types, types of executors obtained through abstraction by the GPU are GPU types, and types of executors obtained through abstraction by the NPU are NPU types.

That a type of an executor matches a type of an executable entity executed by the executor specifically means that a type of instruction code that can be executed by the executor is the same as a type of instruction code in the executable entity executed by the executor. The instruction code in the executable entity is instruction code in a basic algorithm unit corresponding to the executable entity.

For example, for an executor obtained by the CPU, instruction code in a basic algorithm unit corresponding to an executable entity executed by the executor is CPU instruction code. For another example, for an executor obtained by the GPU, instruction code in a basic algorithm unit corresponding to an executable entity executed by the GPU is GPU instruction code.

In a possible implementation, the executing the first executable entity in the ready queue further includes:
generating a scheduling message, where the scheduling message is sent to the upper-level message queue.

In a possible implementation, if the basic algorithms corresponding to the target service function include some basic algorithms that have no invoking sequence, for executable entities generated based on these basic algorithms, the executor may concurrently execute these executable entities, to fully use computing resources, so as to improve program execution efficiency.

The executable entity is obtained based on the to-be-processed data and the basic algorithm unit, and the executable entity is placed in a corresponding ready queue based on the type of the executable entity. Different executors may simultaneously obtain, from the ready queue, executable entities that can be executed by the executors, so that the executors obtained based on the heterogeneous computing unit can execute different executable entities concurrently without control of the developer. Service functions are decomposed into fixed basic algorithm units, and each basic algorithm unit includes only algorithm logic instructions. There is no thread switching or mutual exclusion and synchronization waiting, thread switching preemption does not occur during execution, and the execution is completely controlled by an algorithm framework. A scale of a basic algorithm unit is small, a quantity of computing execution instructions is determined, and execution time is determined, thereby effectively resolving a problem of an uncertain delay in a service execution process.

Based on a flexible heterogeneous computing scheduling mechanism, attributes of different basic algorithm units only need to be set to different types, and then the basic algorithm units are scheduled to executors obtained by corresponding heterogeneous computing units for execution. The developer only cares about implementation of core logic of the algorithm, and does not need to care about the execution process, to effectively resolve a problem that service processing cannot be flexibly deployed on different heterogeneous computing units.

According to a second aspect, an embodiment of this application further provides an automated driving system. The automated driving system includes one or more service node sets, each service node set includes one or more service function sets, each service function set includes one or more basic algorithm sets, and the automated driving system further includes:
a scheduler, where the scheduler is configured to: determine a target service node, and invoke, from the one or more service function sets based on a current driving scenario, a target service function corresponding to the target service node, and the scheduler is further configured to: invoke basic algorithms corresponding to the target service function and obtain executable entities corresponding to the basic algorithms; and
at least one executor, where the at least one executor is configured to execute the executable entities.

In a possible manner, the automated driving system further includes:
a driving scenario obtaining module, configured to obtain the current driving scenario based on sensory data.

In a possible manner, the driving scenario obtaining module is further configured to:
obtain a first driving scenario selected by a user; obtain a second driving scenario based on the sensory data; determine whether the first driving scenario is consistent with the second driving scenario; and if the first driving scenario is inconsistent with the second driving scenario, obtain the first driving scenario and use the first driving scenario as the current driving scenario.

In a possible manner, that the scheduler is further configured to: invoke basic algorithms corresponding to the target service function and obtain executable entities corresponding to the basic algorithms further includes:
The scheduler obtains a first executable entity based on to-be-processed data and a first basic algorithm, and the scheduler sends the first executable entity to a wait queue, where the first basic algorithm is one of the basic algorithms corresponding to the target service function.

In a possible manner, the automated driving system further includes at least one sensor, and before the scheduler obtains the first executable entity based on the to-be-processed data and the first basic algorithm,
the scheduler obtains the to-be-processed data from an upper-level message queue, where the to-be-processed data is collected by the at least one sensor, or the to-be-processed data is a scheduling message obtained after a second executable entity is executed, and the second executable entity is executed before the first executable entity.

In a possible manner, after the scheduler sends the first executable entity to the wait queue,
the scheduler sends the first executable entity from the wait queue to a ready queue according to a preset scheduling policy.

In a possible manner, that the at least one executor is configured to execute the executable entities includes:
The at least one executor is configured to execute the executable entity in the ready queue.

In a possible manner, that the scheduler sends the executable entity from the wait queue to a ready queue according to a preset scheduling policy further includes:

The scheduler sends, based on a type of the executable entity, the executable entity to a ready subqueue corresponding to the type of the executable entity, where
the ready queue includes at least one ready subqueue, and the at least one ready subqueue is in a one-to-one correspondence with the at least one executor.

In a possible manner, that the at least one executor executes the executable entity in the ready queue further includes:
The at least one executor generates a scheduling message, where the scheduling message is sent to the upper-level message queue.

According to a third aspect, an embodiment of this application further provides a vehicle. The vehicle has an automated driving system, and the automated driving system may perform some or all of the steps in the method according to the first aspect.

According to a fourth aspect, an embodiment of this application further provides a vehicle, and the vehicle has the automated driving system according to the second aspect.

According to a fifth aspect, an embodiment of this application further provides a computing method, and the computing method is applied to a heterogeneous computing system. The heterogeneous computing system includes one or more service node sets, each service node set includes one or more service function sets, each service function set includes one or more basic algorithm sets, and the computing method includes:
determining a target service node; invoking, from one or more service functional modules based on a current application scenario, a target service functional module corresponding to the target service node; and invoking basic algorithms corresponding to the target service functional module.

In a possible manner, before the invoking, from one or more service function sets based on a current application scenario, a target service function corresponding to the target service node, the method further includes:
obtaining the current application scenario based on collected data.

In a possible manner, before the invoking, from one or more service function sets based on a current application scenario, a target service function corresponding to the target service node, the method further includes:
obtaining a first application scenario selected by a user; obtaining a second application scenario based on the collected data; determining whether the first application scenario is consistent with the second application scenario; and if the first application scenario is inconsistent with the second application scenario, obtaining the first application scenario and using the first application scenario as the current application scenario.

In a possible manner, the obtaining the current application scenario based on collected data includes:
obtaining a first application scenario selected by a user; obtaining a second application scenario based on the collected data; determining whether the first application scenario is consistent with the second application scenario; and if the first application scenario is inconsistent with the second application scenario, obtaining the first application scenario and using the first application scenario as the current application scenario.

In a possible manner, the invoking basic algorithms corresponding to the target service functional module includes:
obtaining a first executable entity based on to-be-processed data and a first basic algorithm, where the first executable entity is sent to a wait queue, and the first basic algorithm is one of the basic algorithms corresponding to the target service functional module.

In a possible manner, before the obtaining a first executable entity based on to-be-processed data and a first basic algorithm, the method further includes:
obtaining the to-be-processed data from an upper-level message queue, where the to-be-processed data comes from outside the heterogeneous computing system, or the to-be-processed data is a scheduling message obtained after a second executable entity is executed, and the second executable entity is executed before the first executable entity.

In a possible manner, after the first executable entity is sent to the wait queue, the method further includes:
sending the first executable entity from the wait queue to a ready queue according to a preset scheduling policy.

In a possible manner, the method further includes:
executing the first executable entity in the ready queue.

In a possible manner, the heterogeneous computing system further includes at least one executor, and the sending the first executable entity from the wait queue to a ready queue according to a preset scheduling policy further includes:
sending, based on a type of the first executable entity, the first executable entity to a ready subqueue corresponding to the type of the first executable entity, where
the ready queue includes at least one ready subqueue, and the at least one ready subqueue is in a one-to-one correspondence with the at least one executor.

In a possible manner, the executing the first executable entity in the ready queue further includes:
generating a scheduling message, where the scheduling message is sent to the upper-level message queue.

It should be noted that for beneficial effects of this embodiment, refer to related descriptions of the first aspect. Details are not described herein again.

According to a sixth aspect, an embodiment of this application further provides a heterogeneous computing system. The heterogeneous computing system includes one or more service node sets, each service node set includes one or more service function sets, each service function set includes one or more basic algorithm sets, and the heterogeneous computing system further includes:
a scheduler, where the scheduler is configured to: determine a target service node, and invoke, from the one or more service function sets based on a current application scenario, a target service function corresponding to the target service node, and the scheduler is further configured to: invoke basic algorithms corresponding to the target service function and obtain executable entities corresponding to the basic algorithms; and
at least one executor, where the at least one executor is configured to execute the executable entities.

In a possible manner, the heterogeneous computing system further includes an application scenario obtaining module, configured to obtain the current application scenario based on collected data.

In a possible manner, the application scenario obtaining module is further configured to:
obtain a first application scenario selected by a user; obtain a second application scenario based on the collected data; determine whether the first application scenario is consistent with the second application scenario; and if the first application scenario is inconsistent with the second application scenario, obtain the first application scenario and use the first application scenario as the current application scenario.

In a possible manner, that the scheduler is further configured to: invoke basic algorithms corresponding to the target service function and obtain executable entities corresponding to the basic algorithms further includes:
The scheduler obtains a first executable entity based on to-be-processed data and a first basic algorithm, and the scheduler sends the first executable entity to a wait queue, where the first basic algorithm is one of the basic algorithms corresponding to the target service function.

In a possible manner, before the scheduler obtains the first executable entity based on the to-be-processed data and the first basic algorithm,
the scheduler obtains the to-be-processed data from an upper-level message queue, where the to-be-processed data comes from outside the heterogeneous computing system, or the to-be-processed data is a scheduling message obtained after a second executable entity is executed, and the second executable entity is executed before the first executable entity.

In a possible manner, after the scheduler sends the first executable entity to the wait queue,
the scheduler sends the first executable entity from the wait queue to a ready queue according to a preset scheduling policy.

In a possible manner, that the at least one executor is configured to execute the executable entities includes:
The at least one executor is configured to execute the executable entity in the ready queue.

In a possible manner, that the scheduler sends the first executable entity from the wait queue to a ready queue according to a preset scheduling policy further includes:
The scheduler sends, based on a type of the executable entity, the first executable entity to a ready subqueue corresponding to the type of the first executable entity, where
the ready queue includes at least one ready subqueue, and the at least one ready subqueue is in a one-to-one correspondence with the at least one executor.

In a possible manner, that the at least one executor executes the executable entity in the ready queue further includes:
The at least one executor generates a scheduling message, where the scheduling message is sent to the upper-level message queue.

According to a seventh aspect, an embodiment of this application provides a chip system, applied to an autonomous driving device, and including one or more interface circuits and one or more processors. The interface circuit is connected to the processor.

The interface circuit is configured to: receive a signal from a memory of the autonomous driving device, and send the signal to the processor, where the signal includes computer instructions stored in the memory.

When the processor executes the computer instructions, the autonomous driving device performs some or all of the steps in the method according to the first aspect.

According to an eighth aspect, an embodiment of this application provides a chip system, applied to an electronic device, and including one or more interface circuits and one or more processors. The interface circuit is connected to the processor.

The interface circuit is configured to: receive a signal from a memory of the electronic device, and send the signal to the processor, where the signal includes computer instructions stored in the memory; and when the processor executes the computer instructions, the electronic device performs some or all of the steps in the method according to the third aspect.

According to a ninth aspect, an embodiment of this application provides a computer-readable storage medium. The computer storage medium stores a computer program, the computer program includes program instructions, and when the program instructions are executed by a processor, the processor is enabled to perform some or all of the steps in the method according to the first aspect or the fifth aspect.

According to a tenth aspect, an embodiment of this application provides a computer program product, including computer instructions. When the computer instructions are run on an electronic device, the electronic device is enabled to perform some or all of the steps in the method according to the first aspect or the fifth aspect.

According to an eleventh aspect, this application further provides a program development system, including:
a basic algorithm set, where the basic algorithm set includes one or more basic algorithm units;
a service function set, where the service function set includes one or more service functional units, and each service functional unit includes one or more basic algorithm units;
a service node set, where the service node set includes one or more service node units, and each service node unit includes one or more service functional units;
a choreography module, where the choreography module is configured to obtain a target algorithm model, the target algorithm model includes one or more target service node units, each target service node includes one or more target service functional units, each target functional unit includes one or more target basic algorithm units; and the target basic algorithm unit is a basic algorithm unit that needs to be invoked to obtain the target algorithm model; and
a code generation module, where the code generation module is configured to generate a code project package by using the target algorithm model.

In a possible manner, the program development system further includes:
a compiling module, where the compiling module is configured to compile the code project file.

In a possible manner, the code project package includes a basic algorithm unit editing portal, and the basic algorithm unit editing portal is used to edit code of the target basic algorithm unit.

In a possible manner, the program development system includes a display interface.

The choreography module obtains the target service functional unit according to a drag instruction performed by a user on the one or more target basic algorithm units on the display interface.

The choreography module obtains the target node unit according to a drag instruction performed by the user on the one or more target service functional units on the display interface.

The choreography module obtains the target algorithm model according to a drag instruction performed by the user on the one or more target node units on the display interface.

These aspects or other aspects of this application are more concise and easier to understand in descriptions of the following embodiments.

### BRIEF DESCRIPTION OF DRAWINGS

To describe technical solutions in embodiments of this application or in the conventional technology more clearly, the following briefly introduces accompanying drawings required for describing embodiments or the conventional technology. It is clear that the accompanying drawings in the following descriptions show merely some embodiments of this application, and a person of ordinary skill in the art may still derive other drawings from these accompanying drawings without creative efforts.
FIG. 1 is a schematic diagram of a system architecture according to an embodiment of this application;
FIG. 2 is a schematic diagram of an architecture of an autonomous driving computing platform according to an embodiment of this application;
FIG. 3 is a schematic flowchart of an autonomous driving control instruction generation method according to an embodiment of this application;
FIG. 4 is a schematic diagram of a three-level model of an automated driving system according to an embodiment of this application;
FIG. 5 is a schematic diagram of a directed acyclic graph according to an embodiment of this application;
FIG. 6 is a schematic flowchart of scheduling a basic algorithm unit (Job) according to an embodiment of this application;
FIG. 7 is a schematic diagram of a relationship between an executor and a ready queue according to an embodiment of this application;
FIG. 8 is a schematic diagram of a structure of an automated driving system according to an embodiment of this application;
FIG. 9 is a schematic flowchart of a computing method according to an embodiment of this application;
FIG. 10 is a schematic diagram of a structure of a heterogeneous computing system according to an embodiment of this application;
FIG. 11 is a schematic diagram of a structure of a program development system according to an embodiment of this application;
FIG. 12 is a schematic diagram of a code project structure corresponding to an automated driving system according to an embodiment of this application;
FIG. 13 is a schematic diagram of constructing a three-level model of an automated driving system according to an embodiment of this application; and
FIG. 14 is a schematic diagram of constructing a three-level model of an automated driving system according to an embodiment of this application.

### DESCRIPTION OF EMBODIMENTS

The following describes embodiments of this application with reference to accompanying drawings.

It should be first noted that, in this application, the basic algorithm unit and the basic algorithm refer to a same object, and the basic algorithm unit and the basic algorithm may be interchanged.

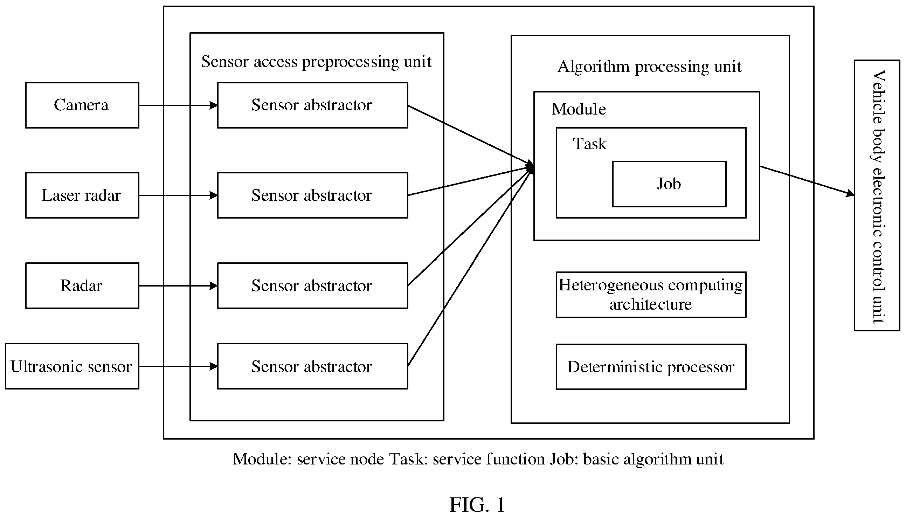

FIG. 1 is a schematic diagram of a system architecture according to an embodiment of this application. As shown in FIG. 1, the system includes a sensor, an autonomous driving computing platform, and a vehicle body electronic control unit (electronic control unit, ECU).

The sensor includes but is not limited to a camera, a laser radar, a radar, and an ultrasonic sensor.

The autonomous driving computing platform includes a sensor access preprocessing unit and an algorithm processing unit. The sensor access preprocessing unit is configured to perform abstract processing on data collected by the sensor, and input processed data to the algorithm processing unit. The algorithm processing unit uses the processed data as an input of an autonomous driving program, executes the autonomous driving program, performs convergence, decision-making, planning and control operations based on the processed data to obtain an autonomous driving control instruction, and outputs the autonomous driving control instruction to the vehicle body electronic control unit. The vehicle body electronic control unit controls vehicle body behavior based on the autonomous driving control instruction, such as lane change, acceleration, deceleration, and braking, to finally achieve autonomous driving. The autonomous driving program is implemented based on a three-level model. The autonomous driving program includes one or more service node sets, each service node set includes one or more service function sets, and each service function set includes one or more basic algorithm sets.

The service node set includes one or more service nodes, each service node includes one or more basic algorithms, and each basic algorithm set includes one or more basic algorithms.

The autonomous driving computing platform is not limited to be at a vehicle end, and may further be a cloud computing device, a cloud server, or a service end. When the autonomous driving computing platform is located in the cloud, after collecting data, a sensor of a vehicle sends the collected data to the autonomous driving computing platform in the cloud. The autonomous driving computing platform obtains the autonomous driving control instruction based on the data collected by the sensor and the autonomous driving program, and sends the autonomous driving control instruction to the vehicle end. The vehicle body electronic control unit at the vehicle end controls the vehicle body behavior based on the autonomous driving control instruction.

It should be noted herein that in this application, the service node may also be referred to as Module, a service function may also be referred to as Task, and a basic algorithm unit may also be referred to as a Job. It should be noted that proper division of the basic algorithm unit Job helps improve a reuse opportunity of the basic algorithm unit, flexibility of basic algorithm unit combination may be improved through division of the service function Task, and an effect of packaging a plurality of service functions into a process for calculation may be implemented through division of the service node Module. Both Module and Task can be used to indicate an organization relationship of Job. When arrangement of different Task in a process does not need to be adjusted, the division of Task and Job levels can also meet most service requirements. A quantity of levels obtained through division is not limited in this application. In an actual heterogeneous computing execution framework, layer division may be opened, so that a user can set more layers based on a requirement, or a maximum quantity of layers that can be operated by the user may be limited to 3.

It should be noted herein that the service node may also be referred to as Module, a service function may also be referred to as Task, and a basic algorithm unit may also be referred to as a Job.

After the processed data obtained by performing the abstract processing on the data collected by the sensor is sent to the algorithm processing unit, the algorithm processing unit processes the processed data by using the autonomous driving program, to obtain the control instruction. A heterogeneous computing architecture is used as a basis for executing an autonomous driving algorithm and runs on a deterministic processor. The heterogeneous computing architecture is responsible for scheduling a basic computing unit in the autonomous driving program to a specified heterogeneous computing unit, so that the heterogeneous computing unit executes the basic computing unit, and finally obtains the autonomous driving instruction.

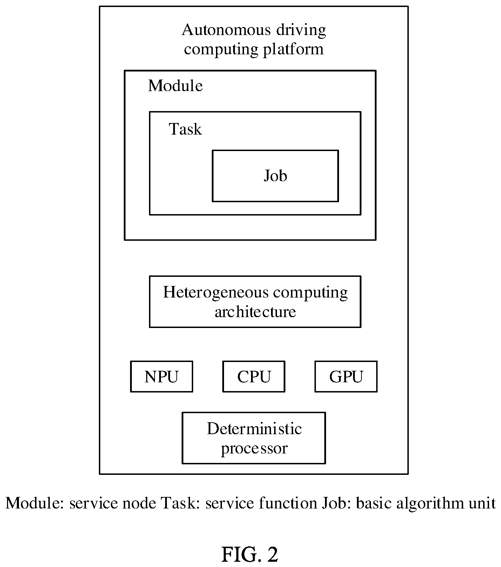

FIG. 2 is a schematic diagram of an architecture of an autonomous driving computing platform according to an embodiment of this application. As shown in FIG. 2, the autonomous driving computing platform includes a hardware part and a software part. The hardware part includes a heterogeneous computing architecture and a deterministic processor. The software part includes an autonomous driving program, and the autonomous driving program is implemented based on a three-level model of a service node (Module), a service function (Task), and a basic algorithm unit (Job). The autonomous driving program includes one or more Module, each Module includes one or more Task, and each Task includes one or more Job. The deterministic processor includes a CPU, a GPU, an NPU, an accelerator, and the like.

The heterogeneous computing framework obtains an executable entity based on Job, and then schedules the executable entity to the deterministic processor for execution. For example, if instruction code of Job is CPU instruction code, an executable entity obtained based on Job is scheduled to the CPU for execution. For another example, if instruction code of Job is GPU instruction code, an executable entity obtained based on Job is scheduled to the GPU for execution.

The autonomous driving computing platform is not limited to be at a vehicle end, and may further be a cloud computing device, a cloud server, or a service end.

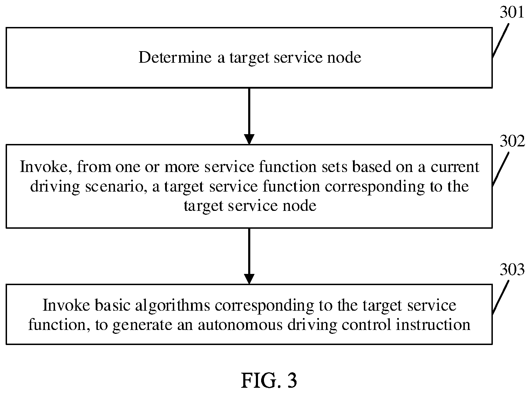

FIG. 3 is a schematic flowchart of an autonomous driving control instruction generation method according to an embodiment of this application. The method is applied to an automated driving system. The automated driving system includes one or more service node sets, each service node set includes one or more service function sets, and each service function set includes one or more basic algorithm sets. As shown in FIG. 3, the method includes the following steps.

S301: Determine a target service node.

The service node set includes one or more service nodes, each service node set includes one or more service functions, each basic algorithm set includes one or more basic algorithms, each service node includes one or more service functions, and each service function includes one or more basic algorithms. Therefore, it may be considered that the service node set includes one or more service function sets, and each service function set includes one or more basic algorithm sets. The target service node is a service node in the service node set.

Optionally, basic algorithm units included in different nodes or service functions may be the same or different. For example, a same algorithm in different service nodes or service functions may be processed by using a same basic algorithm unit, to implement reuse of the basic algorithm unit.

It should be noted that an architecture model of the automated driving system may be a two-level architecture model, including the service function and the basic algorithm unit, or may be a three-level architecture model, including the service node, the service function, and the basic algorithm unit. Certainly, the architecture model may alternatively be a four-level architecture model or an architecture model of more levels. A granularity of an added functional module may be greater than or less than one or more of the service node, the service function, and the basic algorithm unit.

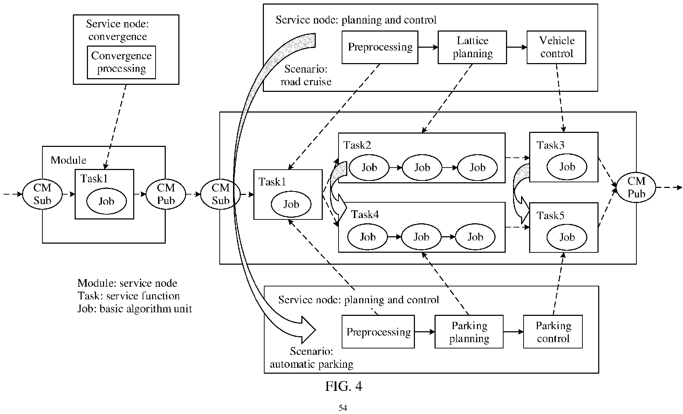

A framework of the automated driving system is described by using an example. Functions of the automated driving system include sensory data convergence and planning and control. As shown in FIG. 4, the framework of the automated driving system includes two service nodes (the two service nodes may form a service node set), which are respectively Module1 and Module2. Module 1 corresponds to the sensory data convergence function of the automated driving system, and Module2 corresponds to the planning and control function of the automated driving system. Further, Module1 includes CM Sub, CM Pub, and Task1, and Task1 includes Job. Sensory data is input by using CM Sub of Module1, and convergence processing is performed on the sensory data by using Job in Module1, to obtain data after the convergence. The converged data is output through CM Pub of Module1, and then input to Module2 through CM Sub of Module2.

Module2 includes five Task: Task1, Task2, Task3, Task4, and Task5. The five Task in Module2 is used to implement the planning and control function of the automated driving system. The planning and control of the automated driving system may implement planning and control in different scenarios, which is specifically implemented by using different Task in Module2. Specifically, planning and control in a road cruise scenario includes three steps: preprocessing, lattice (Lattice) planning, and vehicle control, and the planning in an automatic parking scenario includes three steps: preprocessing, parking planning, and parking control.

The preprocessing function in the road cruise scenario is implemented by Job in Task1 of Module2, the Lattice planning function in the road cruise scenario is implemented by Job in Task2 of Module2, and the vehicle control function in the road cruise scenario is implemented by Job in Task3 of Module2. The preprocessing function in the automatic parking scenario is implemented by Job in Task1 of Module2, the parking planning function in the automatic parking scenario is implemented by Job in Task4 of Module2, and the parking control function in the automatic parking scenario is implemented by Job in Task5 of Module2. Because a specific algorithm implementation of the preprocessing function in the road cruise is the same as a specific algorithm implementation of the preprocessing function in the automatic parking, Job in Task1 of Module2 may be used to implement the preprocessing function in the road cruise and the automatic parking, to implement Job reuse.

Planning and control functions in different scenarios may be implemented by Task in Module2. For example, a process of switching from the planning function in the road cruise scenario to the planning function in the automatic parking scenario may be implemented by switching from Task2 in Module2 to Task4 in Module2.

For example, in the cruise scenario, a calculation formula for implementing a function is y=ax*x+bx+c. In the parking scenario, a calculation formula for implementing parking is y=dx*x+ex+c. In this case, when the scenario changes, the algorithm needs to be switched, and the algorithm is divided into small-granularity tasks. For example, x*x is Job1, x*x multiplied by a coefficient a is Job2, x*x multiplied by a coefficient d is Job3, bx is Job4, ex is Job5, and c is Job6. In this way, two Task can be combined. Job1 -> Job2 -> Job4 -> Job6 are combined into Task1, and Job1 -> Job3 -> Job5 -> Job6 are combined into Task2. Module1 is a node responsible for completing the planning. With the two Task in place, in the cruise scenario, Task1 is executed, and after the scenario changes, Task2 is switched to for performing the calculation of Task2. Each Task includes one or more basic algorithm units.

S302: Invoke, from the one or more service function sets based on a current driving scenario, a target service function corresponding to the target service node.

In a possible design, before the invoking, from the one or more service function sets based on a current driving scenario, a target service function corresponding to the target service node, the method further includes:
obtaining the current driving scenario based on sensory data.

The sensory data includes data collected by various types of sensors on an autonomous vehicle. The various types of sensors on the autonomous vehicle include a positioning sensor, a laser radar, a radar, an ultrasonic sensor, a camera, and the like. The collected data includes information such as location information, ambient environment information, a speed, and an acceleration of the autonomous vehicle.

It should be understood that the sensors and various types of sensory data are merely examples, and are not intended to limit this application. Certainly, another sensor and corresponding sensory data may be further included.

Optionally, the sensory data further includes data collected by a surrounding vehicle and data collected by a road side unit, and the surrounding vehicle and the road side unit send the collected data to the autonomous vehicle.

Further, the obtaining the current driving scenario based on sensory data includes:
obtaining a first driving scenario selected by a user; obtaining a second driving scenario based on the sensory data; determining whether the first driving scenario is consistent with the second driving scenario; and if the first driving scenario is inconsistent with the second driving scenario, obtaining the first driving scenario and using the first driving scenario as the current driving scenario.

In a possible design, before the invoking, from the one or more service function sets based on a current driving scenario, a target service function corresponding to the target service node, the method further includes:
obtaining a first driving scenario selected by a user; obtaining a second driving scenario based on the sensory data; determining whether the first driving scenario is consistent with the second driving scenario; and if the first driving scenario is inconsistent with the second driving scenario, obtaining the first driving scenario and using the first driving scenario as the current driving scenario.

Identification of the driving scenario may be implemented by analyzing the sensory data, that is, a driving scenario in which a vehicle is currently located is determined by using the sensory data. In a possible implementation, identification of a scenario may be determined by a selection of a driver or a passenger. In a possible implementation, when a driving scenario selected by a user (for example, a driver or a passenger) is inconsistent with a driving scenario identified by using sensory data, the driving scenario selected by the driver or the passenger is used as the current driving scenario. In a possible implementation, when a driving scenario selected by the driver or the passenger is inconsistent with a driving scenario identified by using sensory data, the driving scenario identified by using the sensory data is used as the current driving scenario.

It is assumed that the automated driving system has a highway cruise function and an urban road parking function, which are respectively implemented through Task A and Task B. When it is determined, by using the sensory data, that a current scenario is a highway driving scenario, Task A is invoked to implement the highway cruise function. When it is determined, by using the sensory data, that a current scenario is an automatic parking scenario on an urban road, Task B is invoked to implement the urban road automatic parking function. Optionally, Task A and Task B may be a same Module, or may be different Module.

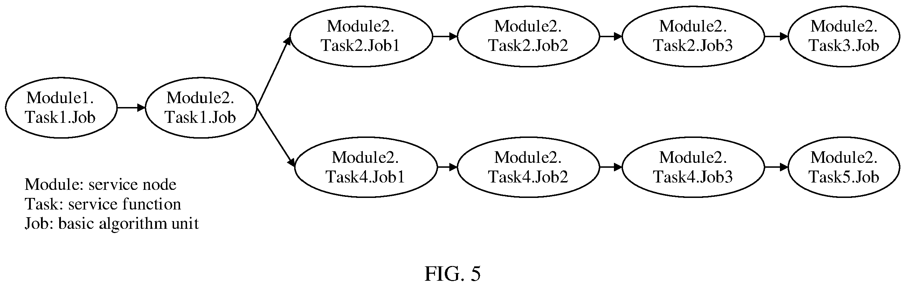

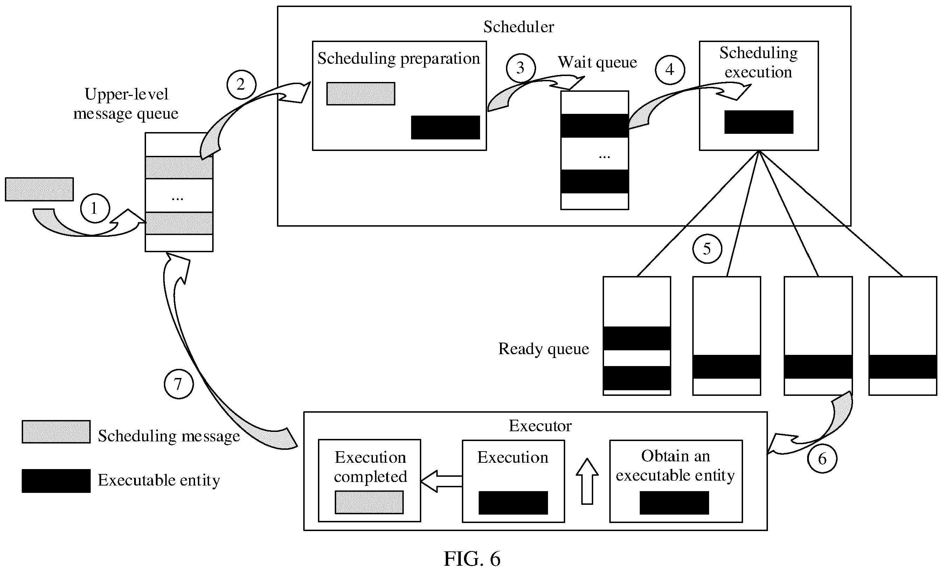

For example, a directed acyclic graph shown in FIG. 5 is a directed acyclic graph corresponding to the basic algorithm unit of the automated driving system shown in FIG. 4. It is assumed that the current driving scenario is determined as a highway driving scenario based on the sensory data, and Task1, Task2, and Task3 in Module2 shown in FIG. 4 are invoked to implement the highway cruise function. Specifically, Job of Task1 in Module2, Job1, Job2, and Job3 in Task2, and Job in Task3 are invoked. As shown in FIG. 6, an invoking sequence is Module2.Task1.Job -> Module2.Task2.Job1 -> Module2.Task1.Job2 -> Module2.Task1.Job3 -> Module3.Task1.Job. Job is obtained based on the sequence, and executable entities are constructed based on to-be-processed data and Job.

The current driving scenario is determined based on the sensory data, Task that needs to be executed is further determined, and Task is switched to be executed. In this way, complex runtime-state time sequence switching becomes a simple scenario status transition, and logic implementation of an autonomous driving algorithm is simpler.

For service function switching scenarios, for example, a side parking function of a highway driving scenario and a roadside parking function of an urban road driving scenario, algorithm implementation is different due to different functions of the two scenarios. A service algorithm developer can define the functions of the two scenarios as two different service functions when constructing a software framework. During invoking of the automated driving system, a scenario is identified based on the sensory data, and different service functions are run. An entire process is simple and fast, and problems such as thread setting, condition branch processing, mutual exclusion, and synchronization in program implementation logic of the automated driving system do not need to be considered.

S303: Invoke basic algorithms corresponding to the target service function, to generate an autonomous driving control instruction.

In a feasible design, invoking basic algorithms corresponding to the target service function includes:
obtaining a first executable entity based on to-be-processed data and a first basic algorithm, where the first executable entity is sent to a wait queue, and the first basic algorithm is one of the basic algorithms corresponding to the target service function.

The executable entity includes executable algorithm code (that is, the basic algorithm) and the to-be-processed data.

In a possible implementation, the automated driving system further includes at least one sensor, and before the obtaining a first executable entity based on to-be-processed data and a first basic algorithm, the method further includes:
obtaining the to-be-processed data from an upper-level message queue, where the to-be-processed data is collected by the at least one sensor, or the to-be-processed data is a scheduling message obtained after a second executable entity is executed, and the second executable entity is executed before the first executable entity.

Specifically, after an execution result is obtained after the sensory data or the second executable entity is executed, the execution result of the sensory data or the second executable entity is placed in the upper-level message queue. The first basic algorithm is obtained from basic algorithms corresponding to the target service function, to-be-processed data of the first basic algorithm unit, that is, the to-be-processed data, is obtained from the upper-level message queue, and an executable entity, that is the first executable entity corresponding to the first basic algorithm unit, is generated based on the first basic algorithm unit and the to-be-processed data of the first basic algorithm unit. The to-be-processed data of the first basic algorithm unit is the sensory data or an execution result obtained after an executable entity (that is, the second executable entity) that is obtained based on a basic algorithm unit invoked before the first basic algorithm unit is executed.

In a possible implementation, after the first executable entity is sent to the wait queue, the method further includes:
sending the first executable entity from the wait queue to a ready queue according to a preset scheduling policy.

It should be noted that the preset scheduling policy may be adjusted based on an actual service requirement, to make full use of heterogeneous computing resources. In a possible implementation, when executable entities sequentially generated by sensory data that is input at consecutive moments are all in the wait queue, concurrent computing may be implemented through scheduling. For example, when executable entities R1', R1", and R1‴ of a same type corresponding to sensory data at consecutive moments t1, t2, and t3 are all in the wait queue, the three executable entities may be scheduled to enter a ready queue corresponding to an executor of the type, and are further concurrently executed by the executor. After R1', R1", and R1‴are executed, based on the preset sequence of the directed acyclic graph, executable entities R2', R2", and R2‴ respectively corresponding to three consecutive moments are generated, and enter the wait queue.

In a possible implementation, the method further includes: executing the first executable entity in the ready queue.

In a possible implementation, the automated driving system further includes at least one executor, and the sending the first executable entity from the wait queue to a ready queue according to a preset scheduling policy further includes:
sending, based on a type of the first executable entity, the first executable entity to a ready subqueue corresponding to the type of the first executable entity, where the ready queue includes at least one ready subqueue, and the at least one ready subqueue is in a one-to-one correspondence with the at least one executor.

For the first basic algorithm unit in the basic algorithm units corresponding to the target service function, after the executable entity, that is, the first executable entity corresponding to the first basic algorithm unit, is obtained, the first executable entity is placed in the wait queue. The executable entities are obtained from the wait queue according to the preset scheduling policy, each executable entity is placed in a ready queue of a corresponding type according to a type of each executable entity, and types of executable entities cached in a ready queue are the same. A plurality of executors obtain the executable entities from the ready queue, and execute the executable entities. The plurality of executors are obtained based on a plurality of heterogeneous computing units, executors obtained based on a same heterogeneous computing unit are of a same type, and a type of an executor matches a type of an executable entity executed by the executor.

Optionally, when a plurality of executable entities (that is, the executable entities obtained through the basic algorithm units corresponding to the target service function) are obtained from the wait queue, the executable entities may be taken out from the wait queue in a "first in, first out" order and placed in the ready queue. "First in, first out" means that when the executable entities are taken out from the wait queue, an executable entity that is placed in the wait queue first is preferably taken out.

Alternatively, when a plurality of executable entities are obtained from the wait queue, the executable entities may be randomly taken out from the wait queue and placed in the ready queue.

Alternatively, when a plurality of executable entities are obtained from the wait queue, the executable entities may be taken out from the wait queue according to a specific preset scheduling policy and placed in the ready queue. The scheduling policy may include first come first served scheduling, high-priority first scheduling, and the like.

That a type of an executor matches a type of an executable entity executed by the executor specifically means that a type of instruction code that can be executed by the executor is the same as a type of instruction code in the executable entity executed by the executor. The instruction code in the executable entity is instruction code in a basic algorithm unit corresponding to the executable entity.

The heterogeneous computing unit includes one or more of a CPU, a GPU, an NPU, a DSP, and a hardware acceleration unit. Types of executors obtained through abstraction by the CPU are all CPU types, types of executors obtained through abstraction by the GPU are GPU types, and types of executors obtained through abstraction by the NPU are NPU types. Instruction code in a basic algorithm unit corresponding to an executable body that can be executed by an executor of the CPU type is CPU instruction code, instruction code in a basic algorithm unit corresponding to an executable body that can be executed by an executor of the NPU type is NPU instruction code, and instruction code in a basic algorithm unit corresponding to an executable body that can be executed by an executor of the GPU type is GPU instruction code.

Optionally, the CPU includes different heterogeneous units, for example, includes a core controlled by Linux and a kernel controlled by non-Linux. The executor may be one or more cores controlled by Linux, or may be one or more kernels controlled by non-Linux.

Because types of executable entities executed by executors of a same type are the same, and types of executable entities cached in each ready queue are the same, it may be considered that executors of one type correspondingly execute executable entities cached in one ready queue.

In a possible implementation, the executing the first executable entity in the ready queue further includes:
generating a scheduling message, where the scheduling message is sent to the upper-level message queue.

After the first executable entity is executed, an execution result is obtained. Then, the scheduling message is generated based on the execution result, and the scheduling message is sent to the upper-level message queue.

It should be noted herein that the autonomous driving control instruction may be obtained after the executable entities corresponding to the basic algorithms corresponding to the target service function are executed.

An example is used to describe a scheduling execution process of the basic algorithm unit in the automated driving system. As shown in FIG. 6, for a basic algorithm unit, data that needs to be processed may be data input from the outside, for example, the foregoing sensory data, or may be data output after an upper-level basic algorithm unit processes data that needs to be processed by the upper-level basic algorithm unit. Both the data input from the outside and the data output by the upper-level basic algorithm unit are placed in the upper-level message queue, as shown in ①and ⑦ in FIG. 6. A scheduler generates an executable entity based on the basic algorithm unit and the data that needs to be processed by the basic algorithm unit, and sends the executable entity to the wait queue (waitQueue), as shown in ② and ③ in FIG. 6. The scheduler executes the scheduling process according to the scheduling policy, and as shown in ④ and ⑤ in FIG. 6, the scheduler places the executable entity in a corresponding ready queue (readyQueue) based on a type of the executable entity. The executor takes out the executable entity from the ready queue, executes the executable entity, obtains an execution result, where the execution result may be considered as output data of the basic algorithm unit corresponding to the executable entity, and sends the execution result to the upper-level message queue, as shown in ⑥ and ⑦ in FIG. 6.

Different heterogeneous computing units are abstracted into different types of executors, and types of executors abstracted from a same heterogeneous computing unit are the same. After completing scheduling, the scheduler sends the executable entity to a corresponding ready subqueue based on the type of the executable entity. Each type of executor corresponds to one ready subqueue, or one heterogeneous computing unit corresponds to one ready subqueue. The executor obtains the executable entity from the ready queue corresponding to the executor, and executes the executable entity.

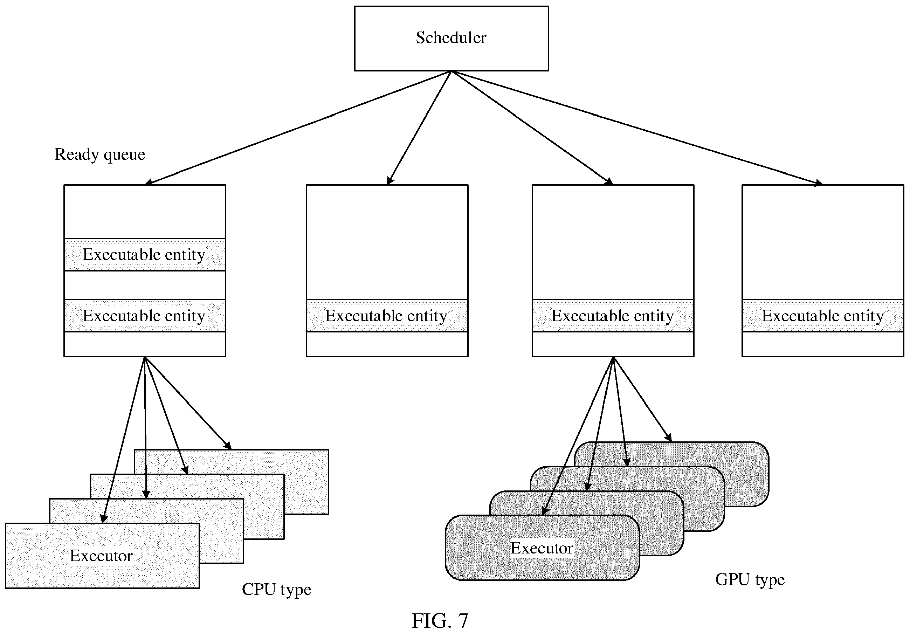

Each type of heterogeneous computing unit is abstracted into a plurality of executors. As shown in FIG. 7, both the CPU and the GPU are abstracted into four executors. The four executors abstracted by the CPU execute executable bodies in a ready subqueue, and the four executors abstracted by the GPU execute an executable body in another ready subqueue. The executor may first execute an executable entity with a high priority in the ready queue, and then execute an executable entity with a low priority based on a priority of the executable body. Alternatively, the executor first executes an executable entity that is placed top of the ready subqueue, and then executes an executable entity that is placed bottom of the ready subqueue based on a sequence in which executable entities are placed in the ready subqueue. The four executors successively obtain four executable entities from the ready subqueue corresponding to the four executors, so that a plurality of executors simultaneously execute a plurality of executable bodies, and the computing resources can be fully utilized.

It should be noted herein that a function of the scheduler may be implemented based on a type of the heterogeneous computing unit, for example, implemented through the CPU.

Optionally, it can be learned from the directed acyclic graph shown in FIG. 5 that, there is no obvious sequence for invoking Module2.Task2.Job1, Module2.Task2.Job2, Module2.Task2.Job3, Module2.Task3.Job, Module2.Task4.Job1, Module2.Task4.Job2, Module2.Task4.Job3 and Module2.Task5.Job. Therefore, when executable entities obtained based on Job can be concurrently executed by the executor, the computing resources can be fully used, and an execution rate of the program can be improved.

It can be learned that, in the solution of this application, a concurrent execution mechanism of the heterogeneous computing unit is provided, and the autonomous driving algorithm corresponding to implementing functions of the automated driving system is decomposed into a smaller computing unit, that is, the basic algorithm unit. The basic algorithm unit is invoked in the sequence indicated by the directed acyclic graph, so that the basic algorithm unit and to-be-processed data of the basic algorithm unit generate an executable entity. A type is set for the executable entity, and the executable entity may be executed by an executor of a same type as the executable entity, so that the executable entity is executed by the determined executor at a determined time. In addition, there is no synchronous or mutually exclusive relationship between a plurality of basic algorithm units obtained through decomposition of the autonomous driving algorithm. Therefore, when being executed, a plurality of executable entities obtained based on the plurality of basic algorithm units also have no synchronous or mutually exclusive relationship, and the plurality of executable entities may be concurrently executed by the executor. In this way, load of the executor is more balanced, and a plurality of heterogeneous processing units can be fully utilized. The plurality of heterogeneous computing units are abstracted into a plurality of executors of different types, and then the executable entity is deployed, based on a type of the basic algorithm unit corresponding to the executable entity, on an executor of a same type for execution, to greatly improve flexibility of deploying the executable entity, and the computing resources of the heterogeneous computing unit can be fully utilized.

It should be noted herein that the method provided in this application is not only used for construction of the automated driving system and execution of heterogeneous computing, but also used for a general-purpose software service. In general-purpose software, if there are a large quantity of small services, each small service may be packaged into some basic algorithm units, then a program framework is constructed according to the method in this application, and then scheduling and execution are performed based on a relationship between these small services.

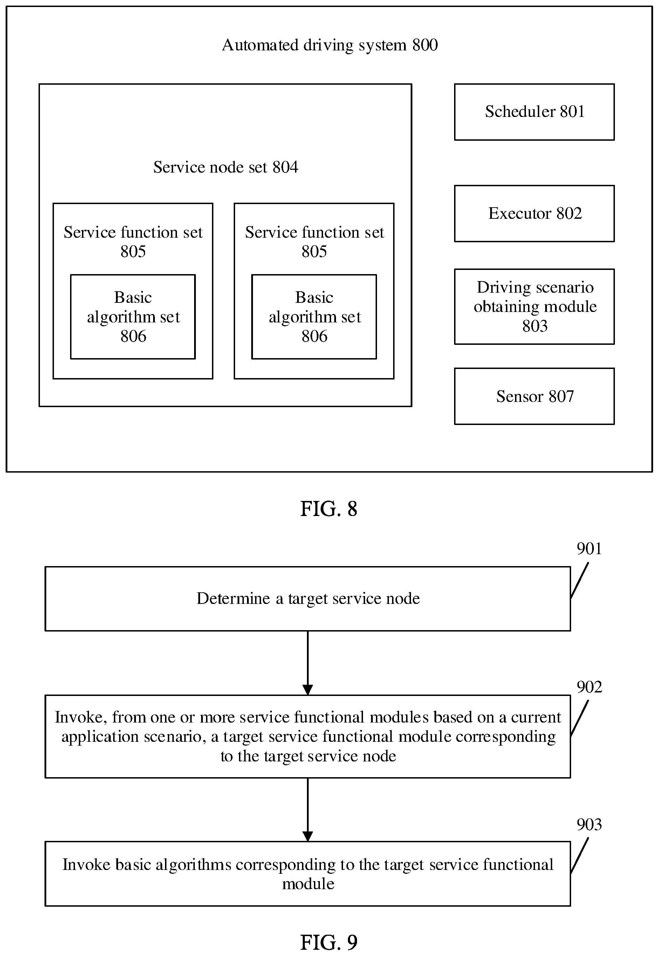

FIG. 8 is a schematic diagram of a structure of an automated driving system according to an embodiment of this application. The automated driving system includes one or more service node sets 804, each service node set 804 includes one or more service function sets 805, and each service function set 805 includes one or more basic algorithm sets 806. As shown in FIG. 8, an automated driving system 800 includes:
a scheduler 801, where the scheduler 801 is configured to: determine a target service node, and invoke, from the one or more service function sets 805 based on a current driving scenario, a target service function corresponding to the target service node, and the scheduler 801 is further configured to: invoke basic algorithms corresponding to the target service function and obtain executable entities corresponding to the basic algorithms; and
at least one executor 802, where the at least one executor 802 is configured to execute the executable entities.

The service node set includes one or more service nodes, each service node set includes one or more service functions, each basic algorithm set includes one or more basic algorithms, each service node includes one or more service functions, and each service function includes one or more basic algorithms. Therefore, it may be considered that the service node set includes one or more service function sets, and each service function set includes one or more basic algorithm sets. The target service node is a service node in the service node set.

In a possible manner, the automated driving system 800 further includes:
a driving scenario obtaining module 803, configured to obtain the current driving scenario based on sensory data.

In a possible manner, the driving scenario obtaining module 803 is specifically configured to:
obtain a first driving scenario selected by a user; obtain a second driving scenario based on the sensory data; determine whether the first driving scenario is consistent with the second driving scenario; and if the first driving scenario is inconsistent with the second driving scenario, obtain the first driving scenario and use the first driving scenario as the current driving scenario.

In a possible manner, the driving scenario obtaining module 803 is further configured to:
obtain a first driving scenario selected by a user; obtain a second driving scenario based on the sensory data; determine whether the first driving scenario is consistent with the second driving scenario; and if the first driving scenario is inconsistent with the second driving scenario, obtain the first driving scenario and use the first driving scenario as the current driving scenario.

In a possible manner, that the scheduler 801 is further configured to: invoke basic algorithms corresponding to the target service function and obtain executable entities corresponding to the basic algorithms further includes:
The scheduler 801 obtains a first executable entity based on to-be-processed data and a first basic algorithm, and the scheduler 801 sends the first executable entity to a wait queue, where the first basic algorithm is one of the basic algorithms corresponding to the target service function.

In a possible manner, the automated driving system 800 further includes at least one sensor 807, and before the scheduler 801 obtains the first executable entity based on the to-be-processed data and the first basic algorithm,
the scheduler 801 obtains the to-be-processed data from an upper-level message queue, where the to-be-processed data is collected by the at least one sensor 807, or the to-be-processed data is a scheduling message obtained after a second executable entity is executed, and the second executable entity is executed before the first executable entity.

In a possible manner, after the scheduler 801 sends the first executable entity to the wait queue,
the scheduler 801 sends the first executable entity from the wait queue to a ready queue according to a preset scheduling policy.

In a possible manner, that the at least one executor 802 is configured to execute the executable entities includes:
The at least one executor 802 is configured to execute the executable entity in the ready queue.

In a possible manner, that the scheduler 801 sends the executable entity from the wait queue to a ready queue according to a preset scheduling policy further includes:
The scheduler 801 sends, based on a type of the executable entity, the executable entity to a ready subqueue corresponding to the type of the executable entity, where the ready queue includes at least one ready subqueue, and the at least one ready subqueue is in a one-to-one correspondence with the at least one executor.

In a possible manner, that the at least one executor 802 executes the executable entity in the ready queue further includes:
The at least one executor 802 generates a scheduling message, where the scheduling message is sent to the upper-level message queue.

It should be noted herein that for specific functions of the automated driving system in this embodiment, refer to the related descriptions in the embodiment shown in FIG. 3. Details are not described herein again.

FIG. 9 is a schematic flowchart of a computing method according to an embodiment of this application. The computing method is applied to a heterogeneous computing system. The heterogeneous computing system includes one or more service node sets, each service node set includes one or more service function sets, and each service function set includes one or more basic algorithm sets. As shown in FIG. 9, the method includes the following steps.

S901: Determine a target service node.

The service node set includes one or more service nodes, each service node set includes one or more service functions, each basic algorithm set includes one or more basic algorithms, each service node includes one or more service functions, and each service function includes one or more basic algorithms. Therefore, it may be considered that the service node set includes one or more service function sets, and each service function set includes one or more basic algorithm sets. The target service node is a service node in the service node set.

S902: Invoke, from one or more service functional modules based on a current application scenario, a target service functional module corresponding to the target service node.

In a possible manner, before invoking, from the one or more service function sets based on the current application scenario, the target service function corresponding to the target service node, the method further includes:
obtaining the current application scenario based on collected data.

Further, the obtaining the current application scenario based on collected data includes:
obtaining a first application scenario selected by a user; obtaining a second application scenario based on the collected data; determining whether the first application scenario is consistent with the second application scenario; and if the first application scenario is inconsistent with the second application scenario, obtaining the first application scenario and using the first application scenario as the current application scenario.

In a possible manner, before invoking, from the one or more service function sets based on the current application scenario, the target service function corresponding to the target service node, the method further includes:
obtaining a first application scenario selected by a user; obtaining a second application scenario based on the collected data; determining whether the first application scenario is consistent with the second application scenario; and if the first application scenario is inconsistent with the second application scenario, obtaining the first application scenario and using the first application scenario as the current application scenario.

In a possible manner, the obtaining the current application scenario based on collected data includes:
obtaining a first application scenario selected by a user; obtaining a second application scenario based on the collected data; determining whether the first application scenario is consistent with the second application scenario; and if the first application scenario is inconsistent with the second application scenario, obtaining the first application scenario and using the first application scenario as the current application scenario.

S903: Invoke basic algorithms corresponding to the target service functional module.

In a possible manner, the invoking the basic algorithms corresponding to the target service functional module includes:
obtaining a first executable entity based on to-be-processed data and a first basic algorithm, where the first executable entity is sent to a wait queue, and the first basic algorithm is one of the basic algorithms corresponding to the target service functional module.

In a possible manner, before the obtaining a first executable entity based on to-be-processed data and a first basic algorithm, the method further includes:
obtaining the to-be-processed data from an upper-level message queue, where the to-be-processed data comes from outside the heterogeneous computing system, or the to-be-processed data is a scheduling message obtained after a second executable entity is executed, and the second executable entity is executed before the first executable entity.

In a possible manner, after the first executable entity is sent to the wait queue, the method further includes:
sending the first executable entity from the wait queue to a ready queue according to a preset scheduling policy.

In a possible manner, the method includes:
executing the first executable entity in the ready queue.

In a possible manner, the heterogeneous computing system further includes at least one executor, and the sending the first executable entity from the wait queue to a ready queue according to a preset scheduling policy further includes:
sending, based on a type of the first executable entity, the first executable entity to a ready subqueue corresponding to the type of the first executable entity, where
the ready queue includes at least one ready subqueue, and the at least one ready subqueue is in a one-to-one correspondence with the at least one executor.

In a possible manner, the executing the first executable entity in the ready queue further includes:
generating a scheduling message, where the scheduling message is sent to the upper-level message queue.

It should be noted herein that for a specific implementation process of steps S901 to S903, refer to the related descriptions of S301 to S303 in FIG. 3. Details are not described herein again.

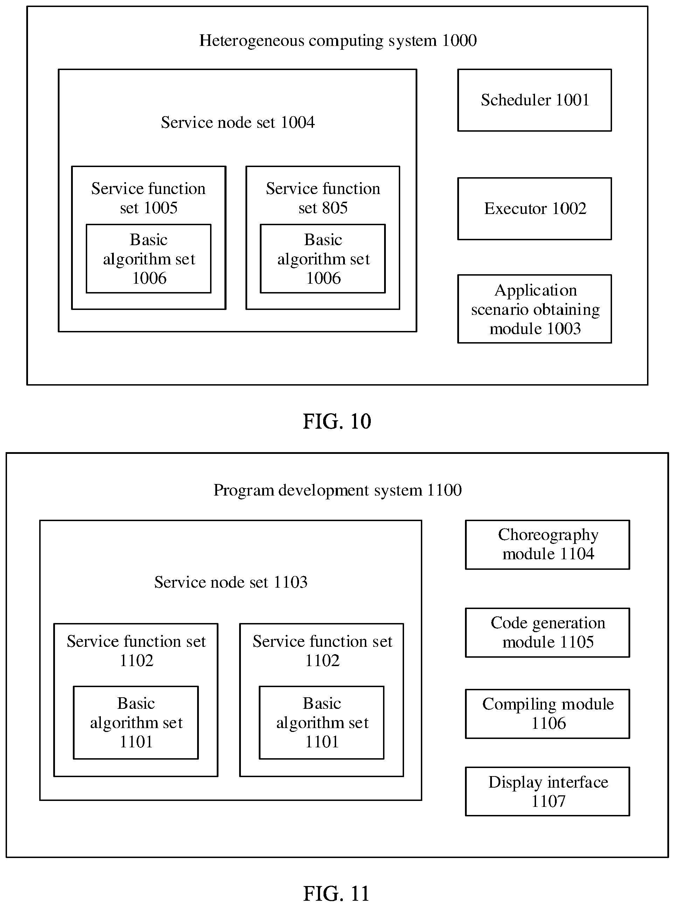

FIG. 10 is a schematic diagram of a structure of a heterogeneous computing system according to an embodiment of this application. A heterogeneous computing system 1000 includes one or more service node sets 1004, each service node set 1004 includes one or more service function sets 1005, each service function set 1005 includes one or more basic algorithm sets 1006, and the heterogeneous computing system 1001 further includes:
a scheduler 1001, where the scheduler 1001 is configured to: determine a target service node, and invoke, from the one or more service function sets 1005 based on a current application scenario, a target service function corresponding to the target service node, and the scheduler 1001 is further configured to: invoke basic algorithms corresponding to the target service function and obtain executable entities corresponding to the basic algorithms; and
at least one executor 1002, where the at least one executor is configured to execute the executable entities.

In a possible manner, the heterogeneous computing system 1000 further includes an application scenario obtaining module 1003, configured to obtain the current application scenario based on collected data.

In a possible manner, the application scenario obtaining module 1003 is further configured to:
obtain a first application scenario selected by a user; obtain a second application scenario based on the collected data; determine whether the first application scenario is consistent with the second application scenario; and if the first application scenario is inconsistent with the second application scenario, obtain the first application scenario and use the first application scenario as the current application scenario.

In a possible manner, that the scheduler 1001 is further configured to: invoke basic algorithms corresponding to the target service function and obtain executable entities corresponding to the basic algorithms further includes:

The scheduler 1001 obtains a first executable entity based on to-be-processed data and a first basic algorithm, and the scheduler 1001 sends the first executable entity to a wait queue, where the first basic algorithm is one of the basic algorithms corresponding to the target service function.

In a possible manner, before the scheduler 1001 obtains the first executable entity based on the to-be-processed data and the first basic algorithm,
the scheduler 1001 obtains the to-be-processed data from an upper-level message queue, where the to-be-processed data comes from outside the heterogeneous computing system 1000, or the to-be-processed data is a scheduling message obtained after a second executable entity is executed, and the second executable entity is executed before the first executable entity.

In a possible manner, after the scheduler 1001 sends the first executable entity to the wait queue,
the scheduler 1001 sends the first executable entity from the wait queue to a ready queue according to a preset scheduling policy.

In a possible manner, that the at least one executor 1002 is configured to execute the executable entities includes:
The at least one executor 1002 is configured to execute the executable entity in the ready queue.

In a possible manner, that the scheduler 1001 sends the first executable entity from the wait queue to a ready queue according to a preset scheduling policy further includes:
The scheduler 1001 sends, based on a type of the executable entity, the first executable entity to a ready subqueue corresponding to the type of the first executable entity, where the ready queue includes at least one ready subqueue, and the at least one ready subqueue is in a one-to-one correspondence with the at least one executor.

In a possible manner, that the at least one executor 1002 executes the executable entity in the ready queue further includes:
The at least one executor 1002 generates a scheduling message, where the scheduling message is sent to the upper-level message queue.

It should be noted herein that for specific functions of the heterogeneous computing system in this embodiment, refer to the related descriptions of the embodiment shown in FIG. 3. Details are not described herein again.

FIG. 11 is a schematic diagram of a structure of a program development system according to an embodiment of this application. As shown in FIG. 11, the program development system includes:
a basic algorithm set 1101, where the basic algorithm set 1101 includes one or more basic algorithm units;
a service function set 1102, where the service function set 1102 includes one or more service functional units, and each service functional unit includes one or more basic algorithm units;
a service node set 1103, where the service node set 1103 includes one or more service node units, and each service node unit includes one or more service functional units;
a choreography module 1104, where the choreography module 1104 is configured to obtain a target algorithm model, the target algorithm model includes one or more target service node units, each target service node includes one or more target service functional units, each target functional unit includes one or more target basic algorithm units, and the target basic algorithm unit is a basic algorithm unit that needs to be invoked to obtain the target algorithm model; and
a code generation module 1105, where the code generation module is configured to generate a code project package by using the target algorithm model.

In a possible manner, a program development system 1100 further includes:
a compiling module 1106, where the compiling module is configured to compile the code project file.

In a possible manner, the code project package includes a basic algorithm unit editing portal, and the basic algorithm unit editing portal is used to edit code of the target basic algorithm unit.

In a possible manner, the program development system 1100 includes a display interface 1107.

The choreography module 1104 obtains the target service functional unit according to a drag instruction performed by a user on the one or more target basic algorithm units on the display interface 1107.

The choreography module 1104 obtains the target node unit according to a drag instruction performed by the user on the one or more target service functional units on the display interface 1107.

The choreography module 1104 obtains the target algorithm model according to a drag instruction performed by the user on the one or more target node units on the display interface 1107.

Optionally, construction of a program includes two steps: First, a framework of the program is constructed, and then code is written on the framework of the constructed program by using the basic algorithm unit editing portal.

An example in which the target algorithm model is a software framework of an autonomous driving program is used for description.

On the display interface 1107 of the program development system 1100, a plurality of functional modules are created, and a one-level architecture is constructed by dragging the functional modules. Then, for the functional modules in the one-level architecture, a lower-level architecture of the functional module is constructed by dragging a sub-functional module on the display interface 1107 of the program development system 1100, and a two-level architecture may be constructed in this manner. Optionally, a three-level architecture or an architecture of more levels may continue to be constructed in this manner.

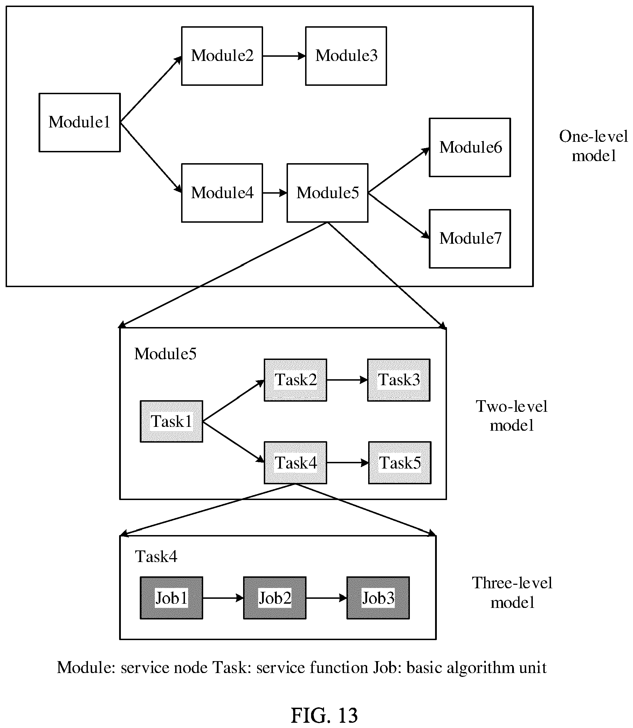

As shown in FIG. 13, a user creates a plurality of Module on an interface of a software development environment, and the user drags the plurality of Module to construct a Module-based one-level model. The user clicks Module5 in the one-level model, creates a plurality of Task on a pop-up interface, and drags the plurality of Task to construct a Task-based two-level model. As shown in FIG. 13, Module5 includes Task1, Task2, Task3, Task4, and Task5. Optionally, each of the plurality of Module may be sampled to construct the Task-based two-level model in this manner. The user clicks Task4 in the two-level model, may create a plurality of Job on a pop-up interface, and drag the plurality of Job to construct a Job-based three-level model. As shown in FIG. 13, Task4 includes Job1, Job2, and Job3, and a directed acyclic graph of Task4 may be represented as Job1 -> Job2 -> Job3. Optionally, each of the plurality of Task may be sampled to construct the Job-based three-level model in this manner.

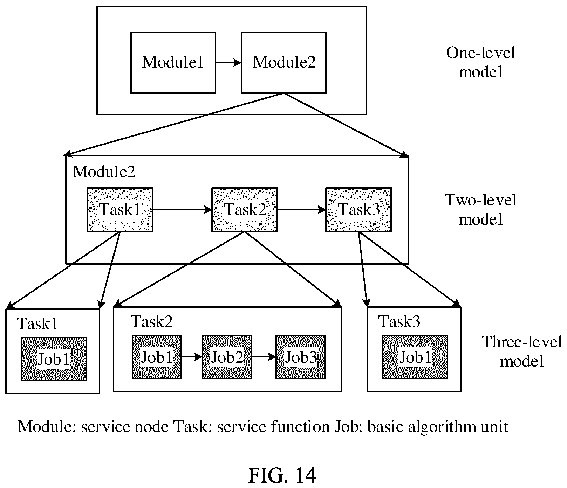

For example, the autonomous driving program includes two service nodes, which respectively implement sensory data convergence, planning and control functions in an autonomous driving algorithm corresponding to the autonomous driving program. Implementing the planning and control function includes three steps: preprocessing, planning, and control, for example, a planning and control function for automatic parking includes three steps: preprocessing, parking planning, and parking control. The preprocessing, planning and control functions are implemented by three service functions. The service function corresponding to the preprocessing includes one basic algorithm unit, the service function corresponding to the planning includes three basic algorithm units, and the service function corresponding to the control includes one basic algorithm unit. Based on this, a framework shown in FIG. 14 may be constructed on an interface of a software development environment. A framework of an autonomous driving program includes Module1 and Module2, which are respectively configured to implement data sensing and convergence and planning and control functions of automatic parking of an autonomous driving algorithm. Module2 includes Task1, Task2, and Task3, and may respectively implement three functions: preprocessing, parking planning, and parking control. Specifically, the preprocessing is implemented through Job1 in Task1, the parking planning is implemented through Job1, Job2, and Job3 in Task2, and the parking control is implemented through Job1 in Task3.

In an example, a user decomposes the autonomous driving algorithm into a service node, a service function, and a basic algorithm unit, which respectively correspond to a three-level model of Module, Task, and Job, and then choreographs and drags the service node, the service function, and the basic algorithm unit in an application algorithm modeling tool, to obtain a complete software framework of the autonomous driving program, so as to implement complete logic of the autonomous driving algorithm. The user develops the autonomous driving program on the software framework of the autonomous driving program based on the autonomous driving algorithm.

In a specific example, an application algorithm developer decomposes an application algorithm into basic algorithm units by using an integrated development environment (integrated development environment, IDE) as the application algorithm modeling tool according to a three-level modeling method provided in this application, and creates the basic algorithm units in the application algorithm modeling tool, that is, Job described in this application. The application algorithm developer drags and choreographs by using the application algorithm modeling tool, combines the basic algorithm units to obtain service function units, and then choreographs and combines the service function units to obtain service nodes, so as to complete construction of the framework of the autonomous driving program.

After the framework of the autonomous driving program is constructed, a code project is generated based on the constructed framework of the autonomous driving program by using the application algorithm modeling tool. The code project includes a basic framework for developing and constructing an application algorithm service starting from a main function, including basic structures of a process and a thread, and specific code within each basic structure is left to a service algorithm developer. Based on the code project, the developer only needs to supplement a real algorithm part and does not need to pay attention to a specific implementation of a heterogeneous computing unit. This greatly simplifies a development process and reduces development workload. After supplementing the real algorithm part, the developer can compile the entire project and generate a release package. The release package is the autonomous driving program.

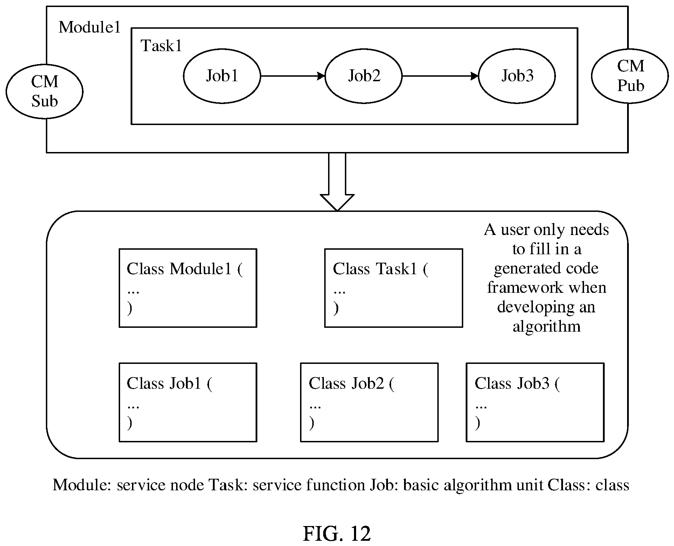

After the framework of the autonomous driving program is constructed in the foregoing manner, the code project may be generated. The code project includes a basic code package corresponding to the framework of the autonomous driving program. The algorithm developer performs program development based on the code project, to obtain the autonomous driving program. FIG. 12 shows a code project corresponding to a service node. As shown in FIG. 12, a Module includes a Task, a Task includes three Job, and the code project includes a basic code package corresponding to Module, a basic code package corresponding to Task, and basic code packages corresponding to three Job. To develop an algorithm, a user only needs to fill in blanks in the generated basic code package to complete development of a program corresponding to the service node.

The software framework of the three-level model of Module, Task and Job proposed in this application is used, so that service modeling logic is clear and complexity is low, and further, a service developer may first design frameworks of some basic algorithm units, and then combine the frameworks of the basic algorithm units to complete logic modeling of a complete autonomous driving algorithm. An entire process focuses on thinking logic of a service and details of implementing a specific software function does not need to be considered, so that a development process is clearer, development workload is reduced, and development usability is improved. In addition, the software framework of the three-level model of Module, Task, and Job provided in this application is used, and after the software framework is constructed, the service developer only needs to write logic code of a core algorithm in the basic algorithm unit, and does not need to consider a software framework of an autonomous driving program, so that burden of constructing a basic code framework is reduced for the service developer.

An embodiment of this application further provides a computer storage medium. The computer storage medium may store a program. When the program is executed, some or all of the steps of any autonomous driving method or computing method recorded in the foregoing method embodiments are performed.

The computer storage medium may be in a cloud server, or may be in a vehicle-end device, or may be in a mobile terminal (for example, a mobile phone or a mobile computer).

An embodiment of this application provides a chip system, applied to an autonomous driving device. The chip system includes one or more interface circuits and one or more processors, and the interface circuit is connected to the processor.

The interface circuit is configured to: receive a signal from a memory of the autonomous driving device, and send the signal to the processor, where the signal includes computer instructions stored in the memory.

When the processor executes the computer instructions, the autonomous driving device performs some or all of the steps in the method shown in FIG. 3.

An embodiment of this application provides a chip system, applied to an electronic device. The chip system includes one or more interface circuits and one or more processors, and the interface circuit is connected to the processor.

The interface circuit is configured to: receive a signal from a memory of the electronic device, and send the signal to the processor, where the signal includes computer instructions stored in the memory. When the processor executes the computer instructions, the electronic device performs some or all of the steps in the method shown in FIG. 9.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to preferred embodiments, and the involved actions and modules are not necessarily required by this application.

In the foregoing embodiments, the description of each embodiment has respective focuses. For a part that is not described in detail in an embodiment, refer to related descriptions in other embodiments.

In the several embodiments provided in this application, it should be understood that the disclosed apparatus may be implemented in other manners. For example, the described apparatus embodiments are merely examples. For example, division into the units is merely logical function division, and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable memory. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a read-only memory (ROM, Read-Only Memory), a random access memory (RAM, Random Access Memory), a removable hard disk, a magnetic disk, or an optical disc.

A person of ordinary skill in the art may understand that all or some of the steps of the methods in embodiments may be implemented by a program instructing related hardware. The program may be stored in a computer-readable memory. The memory may include a flash memory, a read-only memory (English: Read-Only Memory, ROM for short), a random access memory (English: Random Access Memory, RAM for short), a magnetic disk, an optical disc, or the like.

Embodiments of this application are described in detail above. The principle and implementation of this application are described herein through specific examples. The description about embodiments is merely provided to help understand the method and core ideas of this application. In addition, a person of ordinary skill in the art can make variations and modifications to this application in terms of the specific implementations and application scopes based on the ideas of this application. Therefore, the content of this specification shall not be construed as a limit to this application.

## Claims

1. A driving control instruction generation method, applied to an automated driving system, wherein the automated driving system comprises one or more service node sets, each service node set comprises one or more service function sets, each service function set comprises one or more basic algorithm sets, and the method comprises:
determining a target service node;
invoking, from the one or more service function sets based on a current driving scenario, a target service function corresponding to the target service node; and
invoking basic algorithms corresponding to the target service function.

2. The method according to claim 1, wherein before the invoking, from the one or more service function sets based on a current driving scenario, a target service function corresponding to the target service node, the method further comprises:
obtaining the current driving scenario based on sensory data.

3. The method according to claim 1 or 2, wherein before the invoking, from the one or more service function sets based on a current driving scenario, a target service function corresponding to the target service node, the method further comprises:
obtaining a first driving scenario selected by a user;
obtaining a second driving scenario based on the sensory data;
determining whether the first driving scenario is consistent with the second driving scenario; and
if the first driving scenario is inconsistent with the second driving scenario, obtaining the first driving scenario and using the first driving scenario as the current driving scenario.

4. The method according to any one of claims 1 to 3, wherein the invoking basic algorithms corresponding to the target service function comprises:
obtaining a first executable entity based on to-be-processed data and a first basic algorithm, wherein the first executable entity is sent to a wait queue, and the first basic algorithm is one of the basic algorithms corresponding to the target service function.

5. The method according to claim 4, wherein the automated driving system further comprises at least one sensor, and before the obtaining a first executable entity based on to-be-processed data and a first basic algorithm, the method further comprises:
obtaining the to-be-processed data from an upper-level message queue, wherein the to-be-processed data is collected by the at least one sensor, or the to-be-processed data is a scheduling message obtained after a second executable entity is executed, and the second executable entity is executed before the first executable entity.

6. The method according to claim 4 or 5, wherein after the first executable entity is sent to the wait queue, the method further comprises:
sending the first executable entity from the wait queue to a ready queue according to a preset scheduling policy.

7. The method according to claim 6, wherein the method comprises:
executing the first executable entity in the ready queue.

8. The method according to claim 7, wherein the automated driving system further comprises at least one executor, and the sending the first executable entity from the wait queue to a ready queue according to a preset scheduling policy further comprises:
sending, based on a type of the first executable entity, the first executable entity to a ready subqueue corresponding to the type of the first executable entity, wherein
the ready queue comprises at least one ready subqueue, and the at least one ready subqueue is in a one-to-one correspondence with the at least one executor.

9. The method according to claim 7 or 8, wherein the executing the first executable entity in the ready queue further comprises:
generating a scheduling message, wherein the scheduling message is sent to the upper-level message queue.

10. An automated driving system, wherein the automated driving system comprises one or more service node sets, each service node set comprises one or more service function sets, each service function set comprises one or more basic algorithm sets, and the automated driving system further comprises:
a scheduler, wherein the scheduler is configured to determine a target service node, and invoke, from the one or more service function sets based on a current driving scenario, a target service function corresponding to the target service node, and the scheduler is further configured to invoke basic algorithms corresponding to the target service function and obtain executable entities corresponding to the basic algorithms; and
at least one executor, wherein the at least one executor is configured to execute the executable entities.

11. The automated driving system according to claim 10, further comprising:
a driving scenario obtaining module, configured to obtain the current driving scenario based on sensory data.

12. The automated driving system according to claim 10 or 11, wherein the driving scenario obtaining module is further configured to:
obtain a first driving scenario selected by a user;
obtain a second driving scenario based on the sensory data;
determine whether the first driving scenario is consistent with the second driving scenario; and
if the first driving scenario is inconsistent with the second driving scenario, obtain the first driving scenario and use the first driving scenario as the current driving scenario.

13. The automated driving system according to any one of claims 10 to 12, wherein that the scheduler is further configured to: invoke basic algorithms corresponding to the target service function and obtain executable entities corresponding to the basic algorithms further comprises:
the scheduler obtains a first executable entity based on to-be-processed data and a first basic algorithm, and the scheduler sends the first executable entity to a wait queue, wherein the first basic algorithm is one of the basic algorithms corresponding to the target service function.

14. The automated driving system according to claim 13, wherein the automated driving system further comprises at least one sensor, and before the scheduler obtains the first executable entity based on the to-be-processed data and the first basic algorithm,
the scheduler obtains the to-be-processed data from an upper-level message queue, wherein the to-be-processed data is collected by the at least one sensor, or the to-be-processed data is a scheduling message obtained after a second executable entity is executed, and the second executable entity is executed before the first executable entity.

15. The automated driving system according to claim 13 or 14, wherein after the scheduler sends the first executable entity to the wait queue,
the scheduler sends the first executable entity from the wait queue to a ready queue according to a preset scheduling policy.

16. The automated driving system according to claim 15, wherein that the at least one executor is configured to execute the executable entities comprises:
the at least one executor is configured to execute the executable entity in the ready queue.

17. The automated driving system according to claim 16, wherein that the scheduler sends the executable entity from the wait queue to a ready queue according to a preset scheduling policy further comprises:
the scheduler sends, based on a type of the executable entity, the executable entity to a ready subqueue corresponding to the type of the executable entity, wherein
the ready queue comprises at least one ready subqueue, and the at least one ready subqueue is in a one-to-one correspondence with the at least one executor.

18. The automated driving system according to claim 16 or 17, wherein that the at least one executor executes the executable entity in the ready queue further comprises:
the at least one executor generates a scheduling message, wherein the scheduling message is sent to the upper-level message queue.

19. A vehicle, wherein the vehicle has an automated driving system, and the automated driving system may perform the method according to any one of claims 1 to 9.

20. A vehicle, wherein the vehicle has the automated driving system according to any one of claims 10 to 18.

21. A computing method, applied to a heterogeneous computing system, wherein the heterogeneous computing system comprises one or more service node sets, each service node set comprises one or more service function sets, each service function set comprises one or more basic algorithm sets, and the computing method comprises:
determining a target service node;
invoking, from one or more service functional modules based on a current application scenario, a target service functional module corresponding to the target service node; and
invoking basic algorithms corresponding to the target service functional module.

22. The method according to claim 21, wherein before the invoking, from one or more service function sets based on a current application scenario, a target service function corresponding to the target service node, the method further comprises:
obtaining the current application scenario based on collected data.

23. The method according to claim 21 or 22, wherein before the invoking, from one or more service function sets based on a current application scenario, a target service function corresponding to the target service node, the method further comprises:
obtaining a first application scenario selected by a user;
obtaining a second application scenario based on the collected data;
determining whether the first application scenario is consistent with the second application scenario; and
if the first application scenario is inconsistent with the second application scenario, obtaining the first application scenario and using the first application scenario as the current application scenario.

24. The method according to any one of claims 21 to 23, wherein the invoking basic algorithms corresponding to the target service functional module comprises:
obtaining a first executable entity based on to-be-processed data and a first basic algorithm, wherein the first executable entity is sent to a wait queue, and the first basic algorithm is one of the basic algorithms corresponding to the target service functional module.

25. The method according to claim 24, wherein before the obtaining a first executable entity based on to-be-processed data and a first basic algorithm, the method further comprises:
obtaining the to-be-processed data from an upper-level message queue, wherein the to-be-processed data comes from outside the heterogeneous computing system, or the to-be-processed data is a scheduling message obtained after a second executable entity is executed, and the second executable entity is executed before the first executable entity.

26. The method according to claim 24 or 25, wherein after the first executable entity is sent to the wait queue, the method further comprises:
sending the first executable entity from the wait queue to a ready queue according to a preset scheduling policy.

27. The method according to claim 26, wherein the method comprises:
executing the first executable entity in the ready queue.

28. The method according to claim 27, wherein the heterogeneous computing system further comprises at least one executor, and the sending the first executable entity from the wait queue to a ready queue according to a preset scheduling policy further comprises:
sending, based on a type of the first executable entity, the first executable entity to a ready subqueue corresponding to the type of the first executable entity, wherein
the ready queue comprises at least one ready subqueue, and the at least one ready subqueue is in a one-to-one correspondence with the at least one executor.

29. The method according to claim 27 or 28, wherein the executing the first executable entity in the ready queue further comprises:
generating a scheduling message, where the scheduling message is sent to the upper-level message queue.

30. A heterogeneous computing system, wherein the heterogeneous computing system comprises one or more service node sets, each service node set comprises one or more service function sets, each service function set comprises one or more basic algorithm sets, and the heterogeneous computing system further comprises:
a scheduler, wherein the scheduler is configured to: determine a target service node, and invoke, from the one or more service function sets based on a current application scenario, a target service function corresponding to the target service node, and the scheduler is further configured to: invoke basic algorithms corresponding to the target service function and obtain executable entities corresponding to the basic algorithms; and
at least one executor, wherein the at least one executor is configured to execute the executable entities.

31. The system according to claim 30, further comprising:
an application scenario obtaining module, configured to obtain the current application scenario based on collected data.

32. The automated driving system according to claim 30 or 31, wherein the application scenario obtaining module is further configured to:
obtain a first application scenario selected by a user;
obtain a second application scenario based on the collected data;
determine whether the first application scenario is consistent with the second application scenario; and
if the first application scenario is inconsistent with the second application scenario, obtain the first application scenario and use the first application scenario as the current application scenario.

33. The system according to any one of claims 30 to 32, wherein that the scheduler is further configured to: invoke basic algorithms corresponding to the target service function and obtain executable entities corresponding to the basic algorithms further comprises:
the scheduler obtains a first executable entity based on to-be-processed data and a first basic algorithm, and the scheduler sends the first executable entity to a wait queue, wherein the first basic algorithm is one of the basic algorithms corresponding to the target service function.

34. The system according to claim 33, wherein before the scheduler obtains the first executable entity based on the to-be-processed data and the first basic algorithm,
the scheduler obtains the to-be-processed data from an upper-level message queue, wherein the to-be-processed data comes from outside the heterogeneous computing system, or the to-be-processed data is a scheduling message obtained after a second executable entity is executed, and the second executable entity is executed before the first executable entity.

35. The system according to claim 33 or 34, wherein after the scheduler sends the first executable entity to the wait queue,
the scheduler sends the first executable entity from the wait queue to a ready queue according to a preset scheduling policy.

36. The system according to claim 35, wherein that the at least one executor is configured to execute the executable entities comprises:
the at least one executor is configured to execute the executable entity in the ready queue.

37. The system according to claim 36, wherein that the scheduler sends the first executable entity from the wait queue to a ready queue according to a preset scheduling policy further comprises:
the scheduler sends, based on a type of the executable entity, the first executable entity to a ready subqueue corresponding to the type of the first executable entity, wherein
the ready queue comprises at least one ready subqueue, and the at least one ready subqueue is in a one-to-one correspondence with the at least one executor.

38. The system according to claim 36 or 37, wherein that the at least one executor executes the executable entity in the ready queue further comprises:
the at least one executor generates a scheduling message, where the scheduling message is sent to the upper-level message queue.

39. An autonomous driving device, comprising:
a memory, configured to store instructions; and
at least one processor, coupled to the memory, wherein
when executing the instructions, the at least one processor performs the method according to any one of claims 1 to 9.

40. A heterogeneous computing device, comprising:
a memory, configured to store instructions; and
at least one processor, coupled to the memory, wherein
when executing the instructions, the at least one processor performs the method according to any one of claims 21 to 29.

41. A chip system, applied to an autonomous driving device, and comprising one or more interface circuits and one or more processors, wherein the interface circuit is connected to the processor;
the interface circuit is configured to: receive a signal from a memory of the autonomous driving device, and send the signal to the processor, wherein the signal comprises computer instructions stored in the memory; and
when the processor executes the computer instructions, the autonomous driving device performs the method according to any one of claims 1 to 9.

42. A chip system, applied to an electronic device, and comprising one or more interface circuits and one or more processors, wherein the interface circuit is connected to the processor;
the interface circuit is configured to: receive a signal from a memory of the electronic device, and send the signal to the processor, wherein the signal comprises computer instructions stored in the memory; and
when the processor executes the computer instructions, the electronic device performs the method according to any one of claims 21 to 29.

43. A program development system, comprising:
a basic algorithm set, wherein the basic algorithm set comprises one or more basic algorithm units;
a service function set, wherein the service function set comprises one or more service functional units, and each service functional unit comprises one or more basic algorithm units;
a service node set, wherein the service node set comprises one or more service node units, and each service node unit comprises one or more service functional units;
a choreography module, wherein the choreography module is configured to obtain a target algorithm model, the target algorithm model comprises one or more target service node units, each target service node comprises one or more target service functional units, each target functional unit comprises one or more target basic algorithm units, and the target basic algorithm unit is a basic algorithm unit that needs to be invoked to obtain the target algorithm model; and
a code generation module, wherein the code generation module is configured to generate a code project package by using the target algorithm model.

44. The system according to claim 43, further comprising:
a compiling module, wherein the compiling module is configured to compile the code project file.

45. The system according to claim 43 or 44, wherein the code project package comprises a basic algorithm unit editing portal, and the basic algorithm unit editing portal is used to edit code of the target basic algorithm unit.

46. The system according to any one of claims 43 to 45, wherein the program development system comprises a display interface; and
the choreography module obtains the target service functional unit according to a drag instruction performed by a user on the one or more target basic algorithm units on the display interface;
the choreography module obtains the target node unit according to a drag instruction performed by the user on the one or more target service functional units on the display interface; and
the choreography module obtains the target algorithm model according to a drag instruction performed by the user on the one or more target node units on the display interface.
